# EUROPEAN PATENT SPECIFICATION

(11) **EP 2 243 413 B1**
(45) Date of publication and mention of the grant of the patent: **18.06.2014**
(21) Application number: 10157613.0
(22) Date of filing: 24.03.2010
(51) Int. Cl.: A47L 9/00, A47L 9/22

(54) **Fan motor assembly for a vacuum cleaner**
Lüftermotoranordnung für einen Staubsauger
Ensemble de moteur de ventilateur pour aspirateur

(30) Priority: 21.04.2009 KR 20090034457
(43) Date of publication of application: 27.10.2010
(73) Proprietor: Samsung Electronics Co., Ltd., Suwon-si, Gyeonggi-do, 443-742 (KR)
(72) Inventor: Kim, Tak-Soo, Gwangju-city 502-738 (KR)
(74) Representative: Jaeger, Michael David

(56) References cited:
- EP-A1- 0 453 296
- DE-A1- 4 100 858
- DE-A1- 19 843 719
- US-A- 5 293 664

## Description

The invention relates to vacuum cleaners, and more particularly, to fan motor assembly for a vacuum cleaner, which is adapted for use in a domestic, industrial, or commercial vacuum cleaner.

A vacuum cleaner may generally employ a fan motor assembly to forcibly draw in an external air stream from which foreign matter, such as dust, may be removed.

The fan motor assembly may include a plurality of vanes formed on a motor shaft, which may rotate to generate suction force as the motor operates. The generated suction force draws in the external air stream and dusts from the surface being cleaned into a centrifugal separator. Additionally, the generated suction force of the fan motor assembly causes the air drawn into the centrifugal separator to rotate and thereby foreign matter is separated out. A cleaned airstream from which dust or other foreign matter has been removed is then discharged. As this occurs, the fan motor assembly and the drawn air stream generate noise. This is the main cause of the noise generated in a vacuum cleaner.

Accordingly, various kinds of fan motor assemblies and sealing members have been proposed in an attempt to reduce noise of the fan motor assembly.

By way of example, Korean Registered Patent No. 10-0133743 entitled 'Cleaner having a rear noise insulating cover', Korean Registered Patent No. 10-0133744 entitled 'Noise-absorbing chamber of a vacuum cleaner having a spiral tube', Korean Registered Patent No. 10-0233513 entitled 'Motor mounting structure of vacuum cleaner', U.S Patent No. 5,159,738 entitled 'Vacuum cleaner having silence mechanism', and European Patent No. EP 453296 entitled 'Vacuum cleaner' pertain to such examples of fan motor assemblies.

The above-mentioned examples propose a dual casing to extend a discharge passage of a fan motor to reduce noise of a corresponding fan motor assembly and a noise-absorbent member arranged inside the dual casing, without being exposed, and fixed by adhesives or the like to prevent dislocation or deformation thereof.

Although the noise-absorbent members of the above examples may be able to reduce noise by absorbing the discharging air noise, problems may arise when minute foreign particles left unfiltered from the air stream become caught in the noise-absorbent member and accumulate as the air stream is continuously discharged. That is, the foreign particles, once trapped in the noise-absorbent member, deteriorate the air discharging and silencing efficiency. Therefore, it is necessary to clean or replace the noise-absorbent member periodically.

However, according to the above examples, the noise-absorbent members are arranged inside the dual casing without being exposed, making replacement or cleaning difficult.

Due to restricted access to the noise-absorbent member, the noise-absorbent members are often left with foreign particles caught therein, so the air discharging efficiency gradually deteriorates. However, the noise-absorbent member, when left unattended, has a deteriorating discharging efficiency, which causes internal exhaust pressure on the fan motor assembly to rise. The increase of internal exhaust pressure on the fan motor assembly may cause the motor to operate under overload, make more noise and possibly become overheated, thereby damaging the motor.

Further, the examples above generally employ a dual casing structure to extend the passage of discharged air stream, thereby complicating the structure of the fan motor assembly and also requiring an increased number of parts. Due to the complicated structure and need for an increased number of parts, fabrication of the corresponding vacuum cleaner may be more difficult, manufacturing costs may increase and therefore productivity may deteriorate.

Furthermore, due to the increased number of parts and complicated structure, a fan motor assembly may have a limited ability to be assembled in a compact manner and, as a result, it may be difficult to manufacture an apparatus, such as a vacuum cleaner employing the fan motor assembly so that it is compact.

Further, the limited ability of the vacuum cleaner to be assembled in a compact manner may also cause inconvenience to a user, who therefore has to operate a larger vacuum cleaner.

DE 4100858 A1 describes a vacuum cleaner according to the preamble of claim 1, with blower unit which has a blower in an inner housing capsule located in an outer capsule, leaving flow space, and free space between the outer capsule and the housing.

US 5293664 A describes a vacuum cleaner including a blower assembly which comprises a vibration absorbing assembly for absorbing vibrations occurring due to high speed revolutions of electric blower, a noise shielding assembly for shielding the noise so as to prevent the noise from being propagated from the electric blower to outside of the vacuum cleaner, a flow path changing assembly for curving and extending a flow path by bending the flow path of air after passing through the electric blower, and a noise absorbing assembly suppressing the noise by absorbing the noise propagated through the flow path.

The following description relates to a fan motor assembly for a vacuum cleaner. The fan motor assembly includes a fan motor, an outer casing surrounding at least a part of the fan motor, wherein the outer casing includes a discharge portion having a discharge port, and a noise-absorbent member supported by the discharge port such that the discharge port is closed, wherein the noise-absorbent member changes its shape to form a leakage space when an internal exhaust pressure of the fan motor exceeds a predetermined extent.

The discharge portion may comprise a side frame configured to form the discharge port and configured to support the noise-absorbent member.

The side frame may comprise at least one recessed portion extending downwardly from an upper portion.

The side frame may further comprise a support portion protruding from a lower inner portion of the side frame configured to support a lower surface of the noise-absorbent member.

The discharge portion may further comprise at least one upper frame configured to support an upper surface of the noise-absorbent member on an upper portion of the side frame.

The noise-absorbent member may be configured to return to an original shape if the internal exhaust pressure of the fan motor drops below the predetermined extent.

The noise-absorbent member may be made from a foamed member having an elastic resilience.

In another aspect, there is provided a fan motor assembly comprising a motor including a motor casing having a plurality of motor discharge ports formed therein, the motor configured to draw in an external air stream through an inlet and discharge the airstream through the motor discharge ports, an outer casing including an open upper portion configured to receive and surround at least a portion of the motor casing and a discharge portion including a plurality of discharge ports, and a noise-absorbent member positioned between the motor and the casing and surrounding a portion of the motor casing. The noise-absorbent member may be supported at least by a side frame of the discharge portion.

The noise-absorbent member may be air permeable and positioned such that it blocks the discharge ports.

The drawn in external air stream discharged from the motor discharge ports may be discharged from the discharge ports of the casing through the noise-absorbent member.

In response to an internal exhaust pressure of the fan motor exceeding a predetermined degree, the noise-absorbent member may be deformed to form a leakage space, thereby reducing the internal exhaust pressure of the fan motor.

In response to an internal exhaust pressure returning to a degree less than the predetermined degree, the noise-absorbent member may return to its original shape, thereby blocking the discharge port.

The motor may further include a brush portion and the casing may include a discharge passage pipe which receives the brush portion of the motor.

The fan motor assembly may further include at least one support formed at a lower inner side of the side frame and configured to support a lower side of the noise-absorbent member.

The at least one support may be formed as at least one rib extending from a lower inner circumference of the side frame to a center of the discharge portion.

The fan motor assembly may further include an upper frame extending from an upper portion of the side frame and is configured to support an upper edge of the noise-absorbent member.

The upper frame may be formed as at least one rib extending from the upper inner circumference of the side frame.

In another aspect, there is provided an outlet for a fan motor comprising:
a passage for directing an air flow caused by the fan motor;
a deformable noise reduction member disposed in the passage to define an internal air space between the noise reduction member and the passage,
the noise reduction member being so configured so that a pressure in the internal air space exceeding a predetermined level causes the noise reduction member to deform.

The outlet may further comprise a support member for supporting the deformable noise reduction member, the support member comprising supports for engaging with an outer surface of the deformable noise reduction member, and supports for supporting the deformable noise reduction member against a force created by the air flow caused by the fan motor.

The deformable noise reduction member may be annular.

The passage and the deformable noise reduction member may be arranged so that substantially the entire air flow caused by the fan motor passes through the deformable noise reduction member.

Other features and aspects will be apparent from the following detailed description, the drawings and the claims.
FIG. 1 shows a perspective view illustrating an embodiment of a fan motor assembly;
FIG. 2 shows an exploded perspective view of the fan motor assembly of FIG. 1;
FIG. 3 shows a partial cross-section of the fan motor assembly taken on line III-III of FIG. 1, illustrating a noise-absorbent member connected to an outer casing;
FIG. 4 shows a bottom perspective view of the fan motor assembly, illustrating a noise-absorbent member in a normal state; and
FIG. 5 shows a bottom perspective view of the fan motor assembly, illustrating a noise-absorbent member in a deformed state due to increased internal exhaust pressure of the fan motor assembly.

Throughout the drawings and the detailed description, unless otherwise described, the same drawing reference numerals refer to the same elements, features, and structures. The relative size and depiction of these elements may be exaggerated for clarity, illustration, and convenience.

The following detailed description is provided to assist the reader in gaining a comprehensive understanding of the invention. Accordingly, various changes, modifications and equivalents of the systems, apparatuses and/or methods described herein will be suggested to those of ordinary skill in the art. Also, descriptions of well-known functions and constructions may be omitted for increased clarity and conciseness.

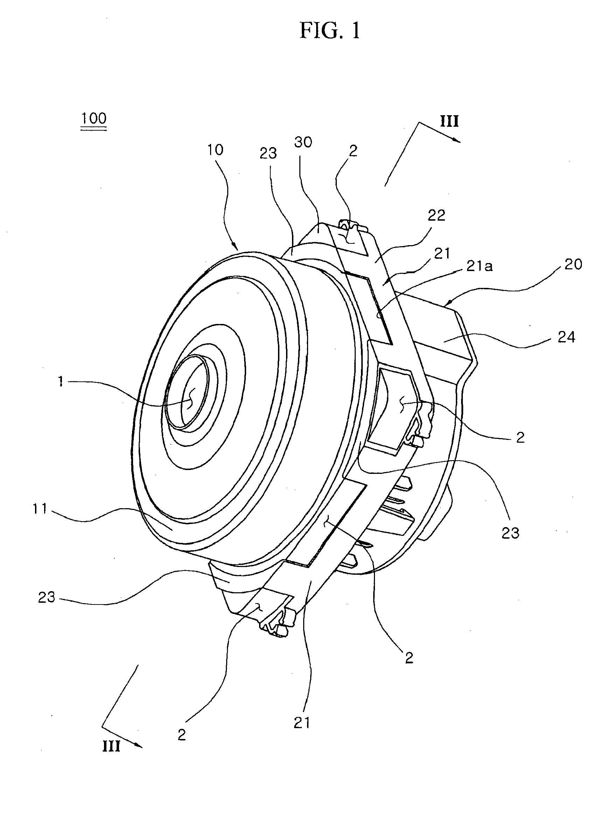

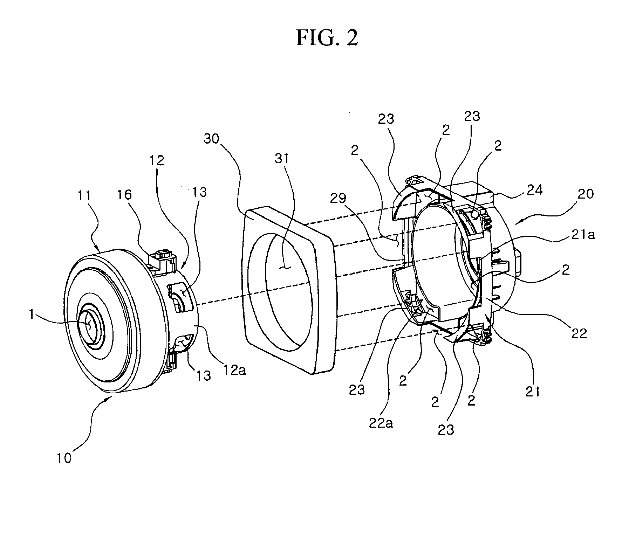

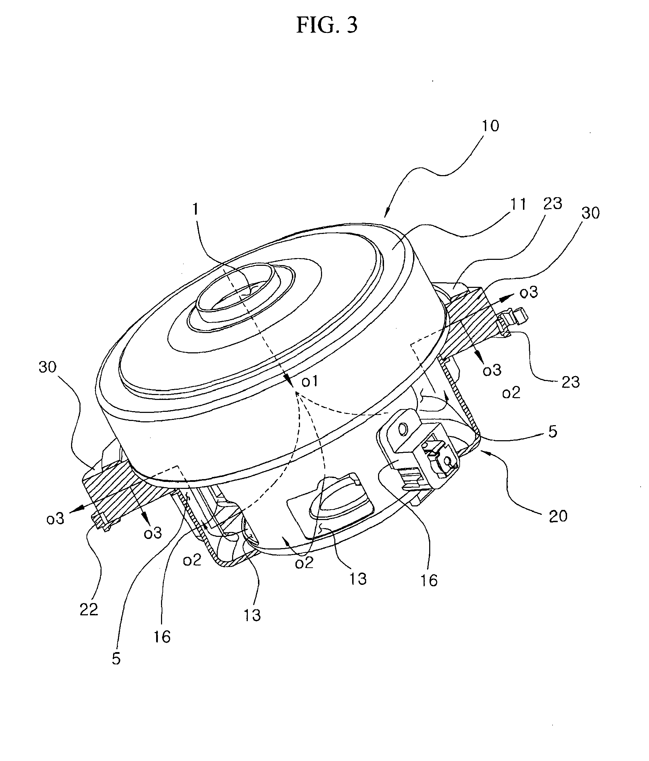

FIG. 1 illustrates a perspective view showing an example of a fan motor assembly. FIG. 2 illustrates an exploded perspective view of a fan motor assembly of FIG. 1. FIG. 3 illustrates a partial cross-section of the fan motor assembly taken on line III-III of FIG. 1, illustrating a noise-absorbent member connected to an outer casing.

Referring to FIG. 1, a fan motor assembly 100 includes a fan motor 10, an outer casing 20, and a noise-absorbent member 30 inserted and supported in an area where the fan motor 10 and the outer casing 20 are connected to one another.

The fan motor 10 has a structure in which an impeller unit 11 having an inlet 1 formed in the middle is connected to an upper portion of the motor 12. A plurality of motor discharge ports 13 are formed on a portion of the motor casing 12a that forms an outer portion of the motor 12. The motor casing 12a also encapsulates further components of the motor, which include an end through which a carbon contact portion of a brush 16 is exposed, a stator, a rotor, a commutator and a motor shaft.

In the embodiment of the fan motor 10 with the above-mentioned structure, a vane connected to the motor shaft disposed inside the impeller unit 11 rotates as the motor 12 starts, thereby drawing an external air stream into the motor 12 through the inlet 1. The air stream is then discharged out through the motor discharge ports 13.

The outer casing 20 surrounds the fan motor and includes a discharge portion 21, discharge passage pipes 24 and a motor securing protrusion (not illustrated). The outer casing 20 has an open upper portion and a closed lower portion.

The discharge portion 21 includes a side frame 22 to support the noise-absorbent member 30 on an outer circumference of the open portion of the outer casing 20, a plurality of supports 22a, a plurality of upper frames 23, and discharge ports 2.

A lower portion of the side frame 22 forms a plurality of discharge ports 2 in cooperation with the outer circumference of the open portion of the outer casing 20 and supports the side of the noise-absorbent member 30. Although the side frame 22 is illustrated as square tubes in FIGS. 1 to 5, the side frame 22 may take other shapes such as cylindrical or appropriately polygonal, for example.

A plurality of recessed portions 21a are formed on the upper portion of the side frame 22 extending down to a predetermined depth to thereby extend the area of the discharge ports 2 and to thus facilitate the exhaustion of air. The supports 22a, which are shelf-shaped, for example, are formed on a lower inner side of the side frame 22 to support the lower side of the noise-absorbent member 30.

The upper frames 23 extend from the upper portion of the side frame 22 to the center of the discharge portion 21 to support an upper edge of the noise-absorbent member 30 where the noise-absorbent member 30 is connected to the discharge portion 21.

The areas where the noise-absorbent member 30 is exposed to an outside by the discharge port 21 are at the discharge ports 2 of the outer casing 20 which act to discharge air stream.

In a further embodiment, the side frame 22 is formed as a cylindrical tube having a diameter larger than that of the open upper portion of the outer casing 20 and is connected to a predetermined lower portion of the outer circumference of the open upper portion of the outer casing 20. However, the configuration of the side frame 22 is not limited to the described embodiments.

Furthermore, instead of being formed as a shelf-shape, the supports 22a may be formed as a rib which may be integrally extended from the lower inner circumference of the side frame 22 to the centre of the discharge portion 21. Alternatively, the supports 22a may be formed as a plurality of ribs separately extending as distinct components from the lower inner circumference of the side frame 22 to the centre of the discharge portion 21.

Likewise, the upper frames 23 may also be formed as a rib which may be integrally extended from the upper inner circumference of the side frame 22, or as a plurality of ribs extending as distinct components from the upper inner circumference of the side frame 22 to the center of the discharge portion 21.

If the fan motor 10 is connected to the outer casing 20, the discharge passage pipes 24 facilitate smooth insertion of the brush 16 t and facilitate the passage of air streams, which are discharged through a motor discharge port 13 formed in a lower portion of the motor 12, towards the discharge portion 21 of the outer casing 20.

The noise-absorbent member 30 has an outer shape which corresponds to the shape of an inner area of the discharge portion 21 and includes a motor coupling hole 31 formed in the centre to receive the motor 12. The noise-absorbent member 30 is formed from a resilient member having predetermined levels of: air permeability for air exhaustion; deformability by pressure and recoverability to its original shape on cessation of the application of pressure. The resilient member may be formed from polyurethane foam, for example, which may be made from polyurethane by foaming and expansion molding. However, the material and method of forming the noise-absorbent member are not limited to these examples, other suitable materials and manufacturing methods may be used as well or instead.

In the structure explained above, the noise-absorbent member 30 is inserted in the discharge portion 21 of the outer casing 20 and supported therein. The noise-absorbent member 30 is removeably inserted in the discharge portion 21 i.e., without requiring a separate fixing process such as bonding, gasket coupling or the like. The outer side of the noise-absorbent member 30 is supported by the side frame 22, the lower side is supported by the supports 22a and the upper portion is supported by the lower side of the outer circumference of the impeller unit 11 and the upper frames 23. As a result, the noise-absorbent member 30 may be mounted or demounted easily.

The fan motor 10 is connected to the outer casing 20 so that the motor 12 is inserted into the outer casing 20 through the motor coupling hole 31. Since the brush 16 is situated in the discharge passage pipe 24, the brush 16 does not interfere with the fan motor 10 when it is inserted into the outer casing 20.

Once the fan motor 10 is connected to the outer casing 20, the fan motor 10 is firmly secured to the outer casing 20 by motor fixing protrusions (not illustrated) and thus assembled to form the fan motor assembly 100.

In the embodiment of the fan motor assembly 100 assembled as explained above, and with reference to FIG. 3, the fan motor 10 draws in an external air stream into an internal space through the inlet 1. The drawn in air stream is displaced along a discharge passage 5 formed between the motor casing 12a and the outer casing 20, through the motor discharge port 13, through the noise-absorbent member 30 connected to the discharge portion 21 and then discharged through the plurality of discharge ports 2. In this case, the discharge passage pipe 24 of the outer casing 20 facilitates the displacement of the air stream discharged from the motor 12 towards the discharge portion 21 and helps to decrease the exhaust pressure of the air stream.

With further reference to FIG. 3, an air stream (o1) is discharged from inside the impeller unit 11 to inside the motor 12, another air stream (o2) is discharged to the discharge passage 5 through the motor discharge port 13, and yet another air stream (o3) is discharged through the discharge ports 2.

An example of the noise-reducing operation of the fan motor assembly 100 with the above-mentioned structure is explained below.

For the purpose of noise reduction, the outer casing 20 is connected to the fan motor 10 so that it surrounds the outer portion of the motor 12. In this way, the outer casing 20 insulates the noise generated by the motor 12 from outside.

The discharge passage tube 24 increases the volume of the air stream discharged through the motor 12 so as to decrease the pressure and thereby decrease air velocity and noise generated by the air flow.

The noise-absorbent member 30 reduces noise generated by the fan motor assembly 100 by blocking the discharge ports 2 of the discharge portion 21. That is, the noise-absorbent member 30 absorbs noise from the motor 12, prevents noise escaping from the fan motor assembly 100 through the discharge ports 2 and reduces velocity of, and absorbs noise from, the air stream discharged through the discharge ports 2.

Furthermore, the fan motor assembly 100 has an increased internal exhaust pressure if minute foreign particles left unfiltered from the air stream are caught in the air holes of the noise-absorbent member 30, causing deterioration of the air permeability of the noise-absorbent member 30.

According to one aspect, the fan motor assembly 100 may prevent internal exhaust pressure from increasing, or reduce the likelihood that internal exhaust pressure will increase, above a predetermined level, since the noise-absorbent member 30 deforms and discharges the internal air of the fan motor assembly 100 if internal exhaust pressure increases.

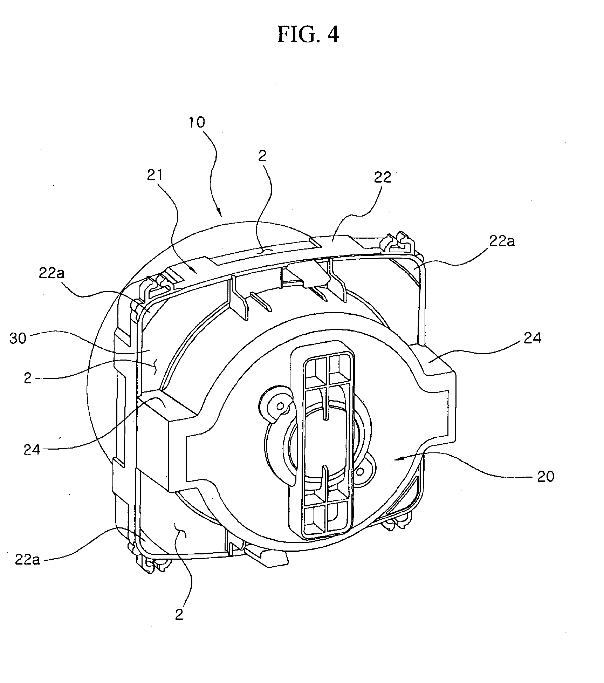

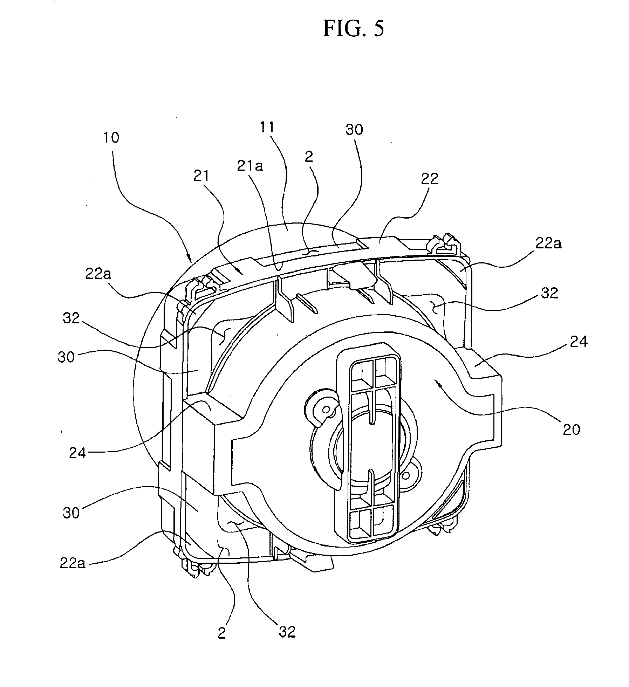

An example of the process of preventing or reducing the likelihood of increasing internal exhaust pressure of the fan motor assembly 100 by changing the shape of the noise-absorbent member 30 is explained below with reference to FIGS. 4 and 5.

FIG. 4 illustrates a bottom perspective view of the fan motor assembly illustrating a noise-absorbent member in a normal state. FIG. 5 illustrates a bottom perspective view of an example of a fan motor assembly illustrating a noise-absorbent member in a deformed state due to increased internal exhaust pressure on the fan motor assembly.

The fan motor assembly 100 performs normal air suction or discharge operations unless the noise-absorbent member 30 exhibits degraded air permeability.

If the fan motor assembly 100 is in a normal operational state, the noise-absorbent member 30 does not change its shape as the internal air of the fan motor assembly 100 is discharged through the noise-absorbent member 30. The noise-absorbent member 30 absorbs the noise generated by the motor 12 and the air stream.

As the fan motor assembly 100 continues operating, fine particles of dusts not separated from the discharged air stream may be caught in the noise-absorbent member 30. As a result, the air permeability of the noise-absorbent member 30 may gradually degrade. With degraded air permeability, the noise-absorbent member 30 may not be able to pass an air stream smoothly, in which case the exhaust pressure of the fan motor assembly 100 may continuously increase. The increase of internal exhaust pressure of the fan motor assembly 100 may, in turn, cause overloading of the motor 12 and keep the noise-absorbent member 30 under constant pressure.

However, in one embodiment, since the noise-absorbent member 30 is connected and supported on the discharge portion 21, the noise-absorbent member 30 is capable of easy deformation. That is, the noise-absorbent member 30 may change its shape under influence of the exhaust pressure, if the exhaust pressure exerted on the noise-absorbent member 30 exceeds a predetermined extent.

Referring to FIG. 5, for example, if the noise-absorbent member 30 changes its shape, a leakage space 32 is formed in the discharge ports 2 allowing internal air of the fan motor assembly 100 to discharge rapidly. As a result, the internal exhaust pressure of the fan motor assembly 100 decreases.

If the fan motor assembly 100 is returned to the normal internal exhaust pressure due to the leakage space 32, the noise-absorbent member 30 returns to its original shape, thereby closing the discharge ports 2 of the discharge portion 21.

As explained above, since the noise-absorbent member 30 is supported by the discharge portion 21 without being fixed thereto so that the noise-absorbent member 30 is exposed to the outside, the noise-absorbent member 30 deforms if the internal exhaust pressure of the fan motor assembly 100 increases, thereby efficiently forming the leakage space 32. Accordingly, since the internal air of the fan motor assembly 100 may be discharged rapidly, the internal exhaust pressure of the fan motor assembly 100 may be prevented from rising above a predetermined extent.

Furthermore, since motor overload due to an increase of internal exhaust pressure of the fan motor assembly 100 is prevented or deterred, noise due to the motor overloading may be avoided.

Furthermore, since motor overloading of the motor is prevented or deterred, motor malfunction due to overloading is prevented or deterred, and a corresponding vacuum cleaner may have an extended life span.

Furthermore, since the noise-absorbent member 30 is supported without being fixed it is capable of changing its shape and it may be easily mounted or dismounted. Accordingly, even when the noise-absorbent member 30 is blocked due to foreign particles caught therein, it may be easily replaced or cleaned. As a result, a corresponding vacuum cleaner may be more easily maintained.

Furthermore, since only one noise-absorbent member 30 and one outer casing 20 are required to reduce the noise of the fan motor assembly 100, the fan motor assembly 100 has fewer components a and simplified structure.

Furthermore, since fewer components and the structure is simplified, the fan motor assembly 100 may be smaller and accordingly, the vacuum cleaner in which the fan motor assembly 100 is disposed may also be smaller.

Furthermore, as there are fewer components and there is a simplified structure, the fan motor assembly 100 or the vacuum cleaner in which the fan motor assembly 100 is disposed may be fabricated efficiently with a reduced manufacturing cost and with increased productivity.

A number of examples of embodiments have been described above. Nevertheless, it will be understood that various modifications may be made. For example, suitable results may be achieved if the described techniques are performed in a different order and/or if components in a described system, architecture, device, apparatus or circuit are combined in a different manner. Accordingly, other implementations are within the scope of the following claims.

## Claims

1. A fan motor assembly (100) for a vacuum cleaner,
comprising:
a fan motor (10);
an outer casing (20) surrounding at least a part of the fan motor (10), wherein the outer casing (20) includes a discharge portion (21) having a discharge port (2); and
a noise-absorbent member (30) supported by the discharge portion (21) such that the discharge port (2) is closed, **characterized in that**,
the noise-absorbent member (30) changes its shape to form a leakage space when an internal exhaust pressure of the fan motor (10) exceeds a predetermined extent.

2. A fan motor assembly (100) as claimed in claim 1, wherein the discharge portion (21) comprises a side frame (22) configured to form the discharge port (2) and configured to support the noise-absorbent member (30).

3. A fan motor assembly (100) as claimed in claim 2, wherein the side frame (22) comprises at least one recessed portion (21a) extending downwardly from an upper portion.

4. A fan motor assembly (100) as claimed in claim 2 or claim 3, wherein the side frame (22) further comprises a support portion (22a) protruding from a lower inner portion of the side frame (22) configured to support a lower surface of the noise-absorbent member (30).

5. A fan motor assembly (100) as claimed in any of claims 2 to 4, wherein the discharge portion (21) further comprises at least one upper frame (23) configured to support an upper surface of the noise-absorbent member (30) on an upper portion of the side frame (22).

6. A fan motor assembly (100) as claimed in any preceding claim, wherein the noise-absorbent member (30) is configured to return to an original shape if the internal exhaust pressure of the fan motor (10) drops below the predetermined extent.

7. A fan motor assembly (100) as claimed in any preceding claim, wherein the noise-absorbent member (30) is made from a foamed member having an elastic resilience.

## Patentansprüche

1. Flügelradmotorbaugruppe (100) für einen Staubsauger, umfassend:
einen Flügelradmotor (10),
ein äußeres Gehäuse (20), das wenigstens einen Teil des Flügelradmotors (10) umgibt, wobei das äußere Gehäuse (20) einen Austrittsteil (21) mit einer Austrittsöffnung (2) enthält, und
ein Lärm absorbierendes Element (30), das derart vom Austrittsteil (21) getragen wird, dass die Austrittsöffnung (2) verschlossen ist, **dadurch gekennzeichnet, dass** das Lärm absorbierende Element (30) seine Form ändert, so dass sich ein Leckbereich bildet, wenn ein innerer Abluftdruck des Flügelradmotors (10) ein vorgegebenes Ausmaß übersteigt.

2. Flügelradmotorbaugruppe (100) nach Anspruch 1, bei der der Austrittsteil (21) einen Seitenrahmen (22) umfasst, der dazu geeignet ist, die Austrittsöffnung (2) zu bilden, und dazu geeignet ist, das Lärm absorbierende Element (30) zu tragen.

3. Flügelradmotorbaugruppe (100) nach Anspruch 2, bei der der Seitenrahmen (22) wenigstens einen vertieften Bereich (21 a) umfasst, der sich von einem oberen Teil nach unten erstreckt.

4. Flügelradmotorbaugruppe (100) nach Anspruch 2 oder Anspruch 3, bei der der Seitenrahmen (22) ferner einen Tragteil (22a) umfasst, der von einem unteren inneren Teil des Seitenrahmens (22) ragt, dazu geeignet, eine untere Oberfläche des Lärm absorbierenden Elements (30) zu tragen.

5. Flügelradmotorbaugruppe (100) nach einem der Ansprüche 2 bis 4, bei der der Austrittsteil (21) ferner wenigstens einen oberen Rahmen (23) umfasst, der dazu geeignet ist, eine obere Oberfläche des Lärm absorbierenden Elements (30) an einem oberen Teil des Seitenrahmens (22) zu tragen.

6. Flügelradmotorbaugruppe (100) nach einem der vorherigen Ansprüche, bei der das Lärm absorbierende Element (30) dazu geeignet ist, in seine ursprüngliche Form zurückzukehren, wenn der innere Abluftdruck des Flügelradmotors (10) unter das vorgegebene Ausmaß fällt.

7. Flügelradmotorbaugruppe (100) nach einem der vorherigen Ansprüche, bei der das Lärm absorbierende Element (30) aus einem geschäumten Element mit elastischem Rückstellvermögen gefertigt ist.

## Revendications

1. Ensemble de moteur de ventilateur (100) pour aspirateur, comprenant :
un moteur de ventilateur (10) ;
un carter extérieur (20) entourant au moins une partie du moteur de ventilateur (10) dans lequel le carter extérieur (20) inclut une portion d'évacuation (21) ayant un orifice d'évacuation (2) ; et
une membrure acoustiquement absorbante (30) supportée par la portion d'évacuation (21) de façon à ce que l'orifice d'évacuation (2) soit fermé, **caractérisée en ce que** la membrure acoustiquement absorbante (30) change de forme pour former un espace de fuite lorsqu'une pression de sortie interne du moteur de ventilateur (10) excède une valeur prédéterminée.

2. Ensemble de moteur de ventilateur (100) selon la revendication 1, dans lequel la portion d'évacuation (21) comprend un châssis latéral (22) configuré pour former l'orifice d'évacuation (2) et configuré pour soutenir la membrure acoustiquement absorbante (30).

3. Ensemble de moteur de ventilateur (100) selon la revendication 2, dans lequel le châssis latéral (22) comprend au moins une portion en renfoncement (21a) s'étendant vers le bas depuis une portion supérieure.

4. Ensemble de moteur de ventilateur (100) selon la revendication 2 ou la revendication 3, dans lequel le châssis latéral (22) comprend en outre une portion de soutien (22a) saillante depuis une portion intérieure inférieure du châssis latéral (22) configurée pour soutenir une surface inférieure de la membrure acoustiquement absorbante (30).

5. Ensemble de moteur de ventilateur (100) selon l'une quelconque des revendications 2 à 4, dans lequel la portion d'évacuation (21) comprend en outre au moins un châssis supérieur (23) configuré pour soutenir une surface supérieure de la membrure acoustiquement absorbante (30) sur une portion supérieure du châssis latéral (22).

6. Ensemble de moteur de ventilateur (100) selon l'une quelconque des revendications précédentes, dans lequel la membrure acoustiquement absorbante (30) est configurée pour revenir à sa forme d'origine si la pression de sortie interne du moteur de ventilateur (10) chute en-dessous de la valeur prédéterminée.

7. Ensemble de moteur de ventilateur (100) selon l'une quelconque des revendications précédentes, dans lequel la membrure acoustiquement absorbante (30) est réalisée à partir d'une membrure en mousse ayant une résilience élastique.
